# EUROPEAN PATENT SPECIFICATION

(11) **EP 2 493 764 B1**
(45) Date of publication and mention of the grant of the patent: **21.05.2014**
(21) Application number: 10793307.9
(22) Date of filing: 25.10.2010
(51) Int. Cl.: B65B 25/00, B65B 35/38, B65B 35/44, B65G 47/68, A23G 7/00

(54) **FEEDING DEVICE OF GROUPED PRODUCTS TO A PACKAGING LINE**
FÖRDERVORRICHTUNG FÜR PRODUKTGRUPPEN ZU EINER VERPACKUNGSLINIE
DISPOSITIF D'ALIMENTATION DE PRODUITS GROUPÉS À UNE CHAÎNE D'EMBALLAGE

(30) Priority: 26.10.2009 IT TO20090816
(43) Date of publication of application: 05.09.2012
(73) Proprietor: Tecnosweet S.r.l., 12051 Alba (Cuneo) (IT)
(72) Inventor: NESCI, Domenico, 12051 Alba (Cuneo) (IT)
(74) Representative: Buzzi, Franco
(86) International application number: PCT/IB2010/054822
(87) International publication number: WO 2011/051875

(56) References cited:
- EP-A1- 1 500 616
- WO-A1-2007/038311
- DE-A1-102007 017 035
- NL-A- 263 654
- US-A- 3 168 204

## Description

### Field of the invention

The present invention relates in general to the confectionery industry, with particular albeit not exclusive reference to the production of chocolate articles, and regards more in particular a device for feeding products from a production line to a packaging line.

### Prior art

In the production of chocolates and similar confectionery articles, the products coming from the moulding process are typically grouped in orderly ranks set alongside one another on plates, from which they are picked up via a motor-driven manipulator, for example with suction-pad pick-up devices, and then deposited on a packaging line to be transferred to wrapping or packaging machines.

Traditionally, in applications of this sort the manipulator is provided for picking up in succession from the plates, as they arrive from the production line, one rank of products at a time and depositing it on a single conveyor belt situated at the initial end of the packaging line.

This solution, albeit more efficient than the case of lines that do not use motor-driven manipulators, presents the drawback of involving a large number of operating cycles by the manipulator, on account of picking-up of one rank of products at a time from the corresponding plates, which consequently calls for a high cycle speed that results in imprecision in the picking-up operation and problems of maintenance of the products on the suction pads of the manipulator. This may involve, in the flow of products towards the wrapping or packaging machines, errors that must then in some way be corrected.

DE-102007017035 discloses a device for feeding grouped products to a packaging line corresponding to the pre-characterizing part of Claim 1. In this known device the groups of products are formed on an additional plate-like conveyor, and the motor-driven belts of the initial feeder are such that only one of them is each time facing the conveying surface of the packaging line, thus requiring displacement of the initial feeder in a direction transverse to the direction of advancement of the belts, i.e. transverse to the conveying surface.

### Summary of the invention

The object of the present invention is to overcome the aforesaid drawback and provide a feed device of the type defined above, which will enable passage from a flow of the products at a constant but cadenced rate (i.e., the rate at which the plates are distributed) to a high-speed continuous flow that is well organized and homogeneous, without any interruptions.

According to the invention, the above object is achieved thanks to the features set forth in the characterizing part of Claim 1.

Thanks to this arrangement, in the first place the cycles of operation of the manipulator are reduced, thus improving the efficiency and reliability thereof, but above all the continuity of flow of the products towards the packaging line is appreciably improved. By way of example, in the case where each plate envisages six ranks of seventeen products per rank, i.e., 102 products in all, the feed device according to the invention enables performance of the cycle of picking-up and depositing of the products at a rate of six plates per minute, hence for a total of 612 pieces per minute, and an equal number of pieces per minute is transferred from the motor-driven belts to the packaging line.

Of course, it is possible to envisage two or more additional motor-driven belts with respect to the number of ranks of products on the plates: however, with at the most two additional belts the aforesaid result in terms of improved efficiency can be obtained with an optimized configuration, from the constructional standpoint, of the initial feeder of the packaging line.

### Brief description of the drawings

The invention will now be described in detail with reference to the annexed drawings, which are provided purely by way of non-limiting example and in which:
Figure 1 is a perspective and schematic top plan view that shows a part of a plant for producing and packaging confectionery products, typically chocolates, including a pair of feed devices according to the invention;
Figure 2 shows a part of Figure 1 at an enlarged scale;
Figure 3 is a perspective view at an enlarged scale of the initial feeder of the feed device according to the invention; and
Figures 4a-4n show the initial feeder of Figure 3 in as many successive operating steps.

### Detailed description of the invention

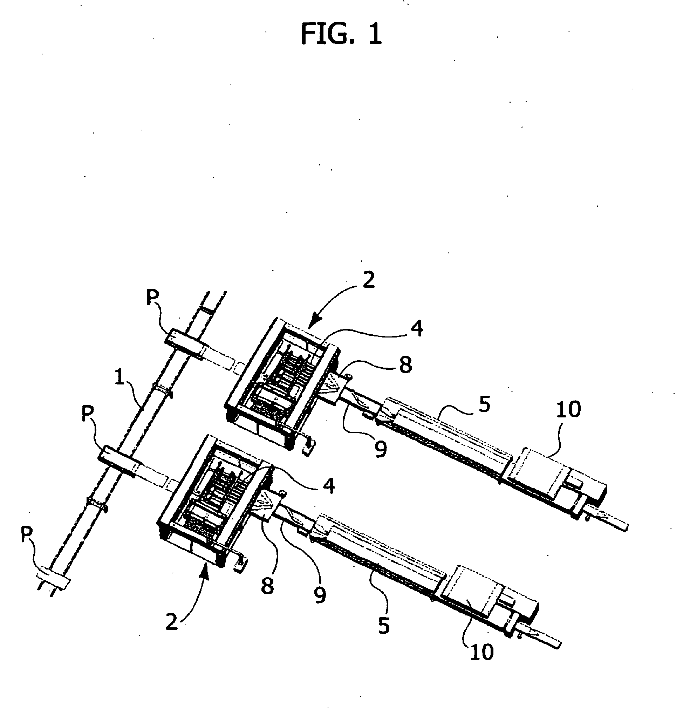

With initial reference to Figure 1, a plant for producing and packaging confectionery products, particularly but not exclusively chocolates, comprises a conveying line designated as a whole by 1, along which plates P coming from a moulding line are transferred to a manipulator unit, designated as a whole by 2.

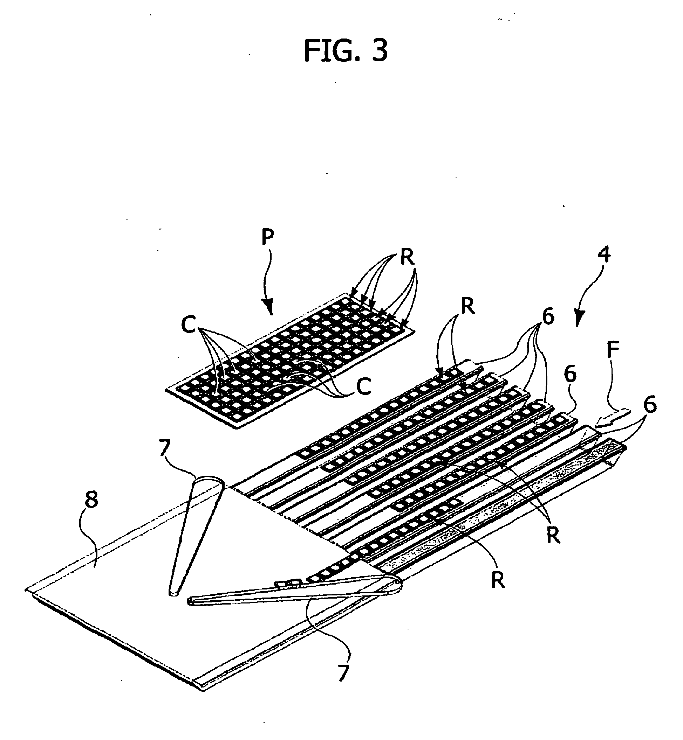

As is illustrated in greater detail in Figure 3, each plate P is formed with sockets containing ranks R, set alongside one another, of chocolates C or similar confectionery products. In the case of the example illustrated, each plate P bears six ranks R of seventeen products C each, for a total of 102 pieces: said number is, however, purely indicative.

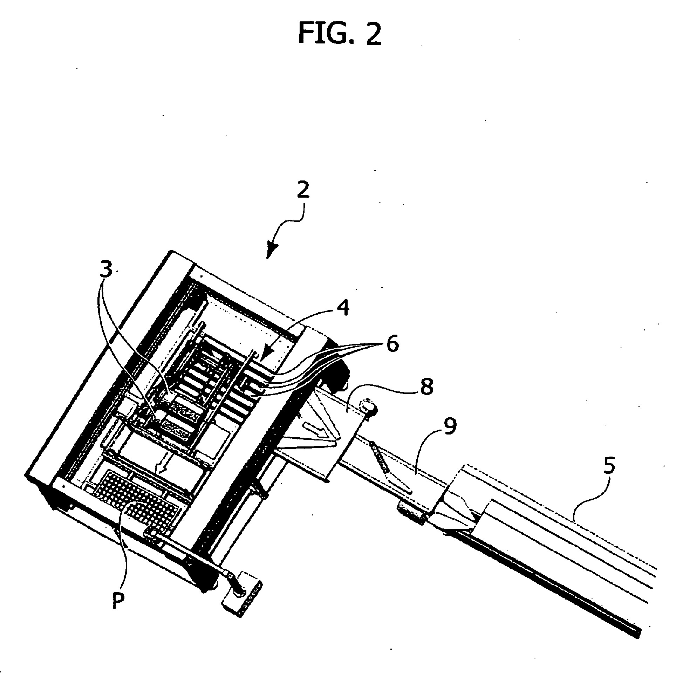

With reference now to Figure 2, each manipulator unit 2 is of a generally conventional type and will not be described in detail for reasons of brevity. For the purposes of the present invention, it is sufficient to clarify that it can comprise a robot 3 that can be displaced between a position of picking up in which it sets itself above the plate P each time transferred from the conveying line 1, via a conventional motor-driven conveyor, and a position of release in which it sets itself above an initial feeder 4 of a respective packaging line 5, so as to terminate, for example, in a position corresponding to wrapping equipment 10, which is also of a conventional type.

The robot 3 of the manipulator unit 2 bears a pick-up assembly with suction pads, which is not illustrated in detail either in so far as it is of a generally conventional type. For the purposes of the present invention, it should, however, be specified that said pick-up assembly can, for example, include a number of suction pads equal to the number of chocolates C carried by each plate P, arranged according to the same order of ranks R. In this way, the manipulator unit 2 is able to pick up simultaneously from the plate P each time supplied thereto all the chocolates C carried by said plate P, and to transfer them then above the initial feeder 4 of the packaging line 5.

With reference now in greater detail to Figure 3, the initial feeder 4 comprises a plurality of endless conveyor belts 6 parallel to one another, arranged in a configuration set alongside one another corresponding to the arrangement of the ranks R of the chocolates C each time picked up by the manipulator unit 2 from each plate P. The belts 6 are actuated alternately, in a way synchronised with one another and with the manipulator unit 2, via respective autonomous motors, not illustrated in so far as they fall within the reach of a person skilled in the branch. Said motors can, for example, be electric motors of the brushless type.

The number of motor-driven belts 6 is greater by at least one unit, and even by two or more units, than the number of the ranks R of the chocolates C arranged on each plate P. In the case of the example illustrated in Figure 3, the number of ranks R is equal to six, and the number of motor-driven belts 6 is equal to seven.

Provided immediately downstream of the initial feeder 4, with reference to the direction of advance of the belts 6, which is indicated by F in Figure 3, is a deviator, simply constituted by a pair of convergent side walls 7 via which the rank R of chocolates C each time moved by a respective motor-driven belt 6 is conveyed towards the centre of a conveying surface 8, in turn followed by a channelling device 9 (Figures 1 and 2) for transfer towards the wrapping equipment 10.

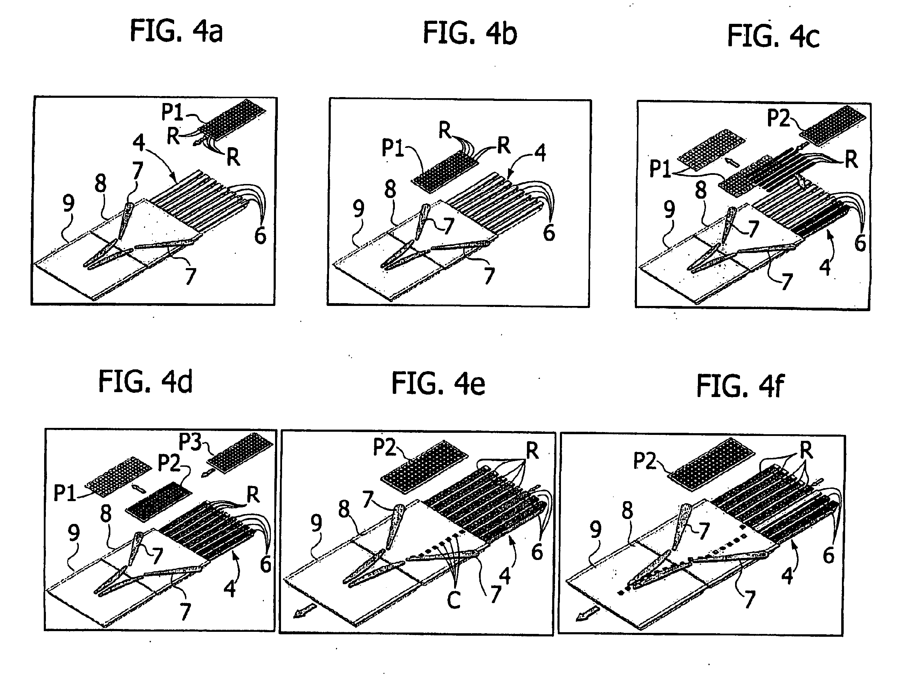

Operation of the feed device according to the invention presented above will now be described with reference to Figures 4a-4n.

Figures 4a-4n represent the example in which the number of belts 6 is greater by two units than the number of the ranks R of chocolates C carried by each plate P. In this case, the ranks R are six, and the belts 6 are eight in number. The operation described hereinafter is, however, the same in the case where the number of ranks R and of belts 6 is different (as, for example, in the case of Figure 3).

Assume starting from an initial condition in which a first plate P1 is transferred from the conveyor 1 to the manipulator unit 2 (Figure 4a) in such a way as to enable simultaneous picking-up of the chocolates C of all its ranks R by the manipulator unit 2 (Figure 4b).

Following upon picking up, the plate P1 is unloaded from the manipulator unit 2, and the six ranks R withheld by the suction pads of the manipulator are positioned on corresponding six motor-driven belts 6, while the next plate P is being transferred towards the manipulator unit 2 (Figure 4c).

It should be pointed out that, in the case where the distance between the belts 6 is greater than the distance between the ranks R on the plates P, it will be necessary for the suction pads of the manipulator unit 2 to have the possibility of being moved away from and brought up to one another accordingly.

The ranks R are then deposited on the corresponding belts 6, whilst the two additional belts 6 (the ones further to the right in Figure 4d) remain free. At the same time, the next plate P2 sets itself in a position corresponding to the manipulator unit 2 to enable picking-up of the corresponding ranks R, while a further plate P3 is arriving (Figure 4d).

Activation in succession of the six belts 6 on which the ranks R picked up from the plate P1 have been deposited is governed. Hence a first rank R is fed via activation of a first belt 6 so that the corresponding chocolates C transferred on the conveying surface 8 are deviated by the deviators 7 towards the centre and then conveyed onto the conveying surface 9 to proceed along the packaging line 5 as far as the wrapping equipment 10 (Figure 4e).

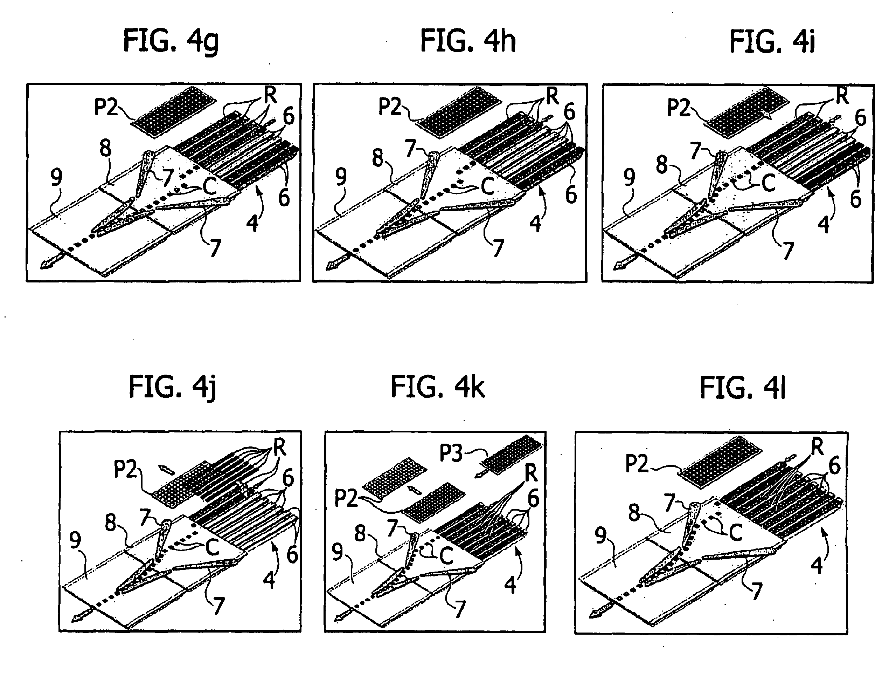

Then the second rank R (Figure 4f), the third rank R (Figure 4g), and the fourth rank R (Figure 4h) are fed in succession, via activation of the corresponding belts 6, whilst the next plate P2 remains waiting.

Whilst the fourth rank R is completely unloaded from the respective belt 6 onto the conveying surface 8, the manipulator of the unit 2 intervenes on the next plate P2 picking up the corresponding ranks R therefrom (Figure 4i) to enable then depositing thereof on the four belts 6, which are by now emptied, and on the two additional belts 6 (Figure 4j). While the two belts 6 on which the corresponding two ranks R of the plate P1 are still present proceed to subsequent unloading of the corresponding chocolates C onto the conveying surface 8, the ranks R of the plate P2 are deposited on the six free belts 6 (Figure 4k), whilst the empty plate P2 is unloaded from the manipulator unit 2 to enable arrival of the next plate P3.

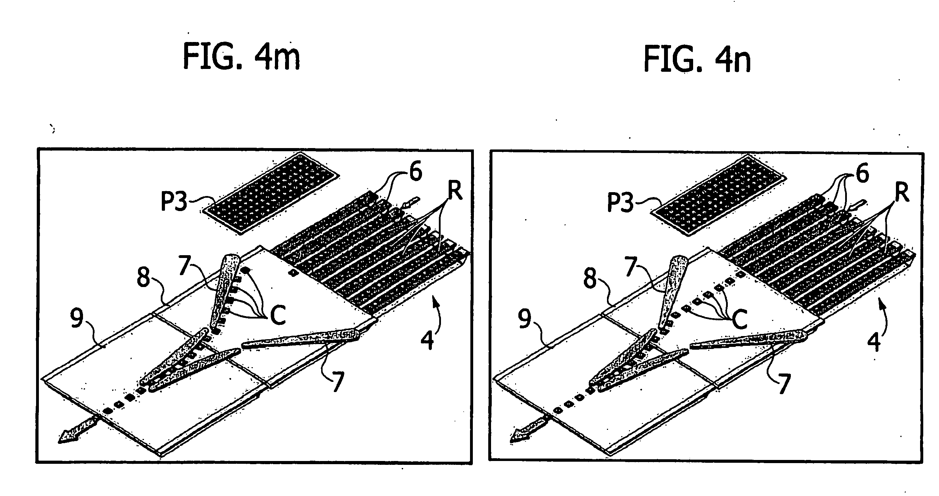

Then the last two ranks R of the first plate P1 are unloaded (Figures 4l and 4m), and subsequently the ranks R of the second plate P2 are unloaded (Figure 4n), whilst the third plate P3 remains in a wait state until four ranks of the plate P2 have been unloaded in succession from the corresponding belts 6 so as to enable the six ranks R of the plate P3 to be deposited.

It is evident that in the case of the example represented in Figure 4 the two right-hand terminal belts 6, and the two left-hand terminal belts 6 of the initial feeder 4 are alternately used, in conjunction with the four central belts 6, to enable the ranks R of a next plate to be deposited whilst the last two ranks R of the previous plate are about to be unloaded.

Of course, the same principle applies to plates P with a number of ranks R other than six: in this case, the number of belts 6 and of the corresponding additional belts 6 will vary accordingly.

It emerges clearly from the foregoing description that the feed device according to the invention enables on the one hand reduction of the cycle speed of each manipulator unit 2, thus improving the efficiency and reliability of picking-up and depositing thereof, and on the other ensures a flow of products towards the packaging lines that is constant, homogeneous, and above all without any interruption.

Of course, the details of construction and the embodiments may vary widely and may also be combined in a different way with respect to what is described and illustrated herein, without thereby departing from the scope of the present invention, as defined in the ensuing claims.

## Claims

1. A device for feeding grouped products (C) to a packaging line (5), wherein said products (C) are arranged in ranks (R) set alongside one another on groups transferred from a production line (1) to a motor-driven manipulator (2) of the packaging line (5), along which said ranks (R) are made to advance in an aligned condition one after another along a conveying surface (8), wherein said manipulator (2) is provided for picking up said ranks (R) of products (C) from each group and depositing them on an initial feeder (4) of said packaging line (5) including a plurality of autonomously motor-driven belts (6) arranged as said ranks (R) and actuated in succession, the number of said belts (6) being at least greater by one than the number of the ranks (R), so that depositing on said belts (6) of the ranks (R) of one group by said manipulator (2) is performed before all the ranks (R) of the previous group have been evacuated from said belts (6) towards said packaging line (5) through said conveying surface (8), said device being **characterized in that** the ranks (R) of products (C) are arranged on plates (P) from each of which said ranks (R) are picked up jointly by said manipulator, and **in that** said motor-driven belts (6) are all terminating in front of said conveying surface (8).

2. The feed device according to Claim 1, **characterized in that** the number of said belts (6) is greater by two than the number of the ranks (R) on each plate (P).

## Patentansprüche

1. Vorrichtung zum Fördern von gruppierten Produkten (C) zu einer Verpackungslinie (5), wobei die Produkte (C) in Reihen (R) angeordnet sind, die entlang voneinander in von einer Produktionslinie (1) zu einem motorbetriebenen Manipulator (2) der Verpackungslinie (5) übertragenen Gruppen gesetzt sind, entlang von welchen die Reihen (R) in einer ausgerichteten Bedingung nacheinander entlang einer Förderfläche (8) vorgeschoben werden, wobei der Manipulator (2) vorgesehen ist, um die Reihen (R) von Produkten (C) aus jeder Gruppe aufzugreifen und auf einem Eingangsförderer (4) der Verpackungslinie (5) abzulegen, der eine Vielzahl von autonom motorbetriebenen Bändern (6) umfasst, die wie die Reihen (R) angeordnet sind und nacheinander betrieben werden, wobei die Anzahl der Bänder (6) wenigstens um eins größer ist als die Anzahl der Ränge (R), sodass das Ablegen der Reihen (R) einer Gruppe durch den Manipulator (2) auf den Bändern (6) durchgeführt wird, bevor alle Reihen (R) der vorausgehenden Gruppe von den Bändern (6) zu der Verpackungslinie (5) über die Förderfläche (8) übertragen wurden, wobei die Vorrichtung **dadurch gekennzeichnet ist, dass** die Reihen (R) von Produkten (C) auf Platten (P) angeordnet sind, von denen die Reihen (R) gemeinsam durch den Manipulator aufgegriffen werden, und dass die motorbetriebenen Bänder (6) alle vor der Förderfläche (8) enden.

2. Fördervorrichtung nach Anspruch 1, **dadurch gekennzeichnet, dass** die Anzahl der Bänder (6) um zwei größer als die Anzahl der Reihen (R) auf jeder Platte (P) ist.

## Revendications

1. Dispositif d'alimentation de produits groupés (C) à une chaîne d'emballage (5), dans lequel lesdits produits (C) sont disposés dans des rangées (R) les unes à côté des autres, sur des groupes transférés d'une chaîne de production (1) à un manipulateur motorisé (2) de la chaîne d'emballage (5), le long de laquelle, lesdites rangées (R) doivent avancer dans une condition alignée l'une après l'autre le long d'une surface de transport (8), dans lequel ledit manipulateur (2) est prévu pour prélever lesdites rangées (R) de produits (C) de chaque groupe et les déposer sur un dispositif d'alimentation initial (4) de ladite chaîne d'emballage (5) comprenant une pluralité de courroies motorisées de manière autonome (6), agencées en tant que dites rangées (R) et actionnées en succession, le nombre desdites courroies (6) étant au moins supérieur à un par rapport au nombre de rangées (R), de sorte que le dépôt sur lesdites courroies (6) des rangées (R) d'un groupe par ledit manipulateur (2) est réalisé avant que toute les rangées (R) du groupe précédent ont été évacuées desdites courroies (6) vers ladite chaîne d'emballage (5) par le biais de ladite surface de transport (8), ledit dispositif étant **caractérisé en ce que** les rangées (R) de produits (C) sont agencées sur des plaques (P) à partir desquelles lesdites rangées (R) sont prélevées conjointement par ledit manipulateur, et **en ce que** lesdites courroies motorisées (6) s'arrêtent en face de ladite surface de transport (8).

2. Dispositif d'alimentation selon la revendication 1, **caractérisé en ce que** le nombre desdites courroies (6) est supérieur à deux, par rapport au nombre de rangées (R) sur chaque plaque (P).
